# EUROPEAN PATENT SPECIFICATION

(11) **EP 3 136 789 B1**
(45) Date of publication and mention of the grant of the patent: **25.09.2019**
(21) Application number: 14892244.6
(22) Date of filing: 19.08.2014
(51) Int. Cl.: H04W 48/18

(54) **METHOD AND DEVICE FOR CONTROLLING NETWORK CONNECTION**
VERFAHREN UND VORRICHTUNG ZUR STEUERUNG EINER NETZWERKVERBINDUNG
PROCÉDÉ ET DISPOSITIF DE COMMANDE DE CONNEXION DE RÉSEAU

(30) Priority: 23.05.2014 CN 201410222284
(43) Date of publication of application: 01.03.2017
(73) Proprietor: ZTE Corporation, Shenzhen, Guangdong 518057 (CN)
(72) Inventor: FU, Shaoxian, Shenzhen Guangdong 518057 (CN); WANG, Xiangqian, Shenzhen Guangdong 518057 (CN)
(74) Representative: Aipex B.V.
(86) International application number: PCT/CN2014/084737
(87) International publication number: WO 2015/176401

(56) References cited:
- EP-A1- 1 585 354
- WO-A1-2014/075544
- CN-A- 101 325 769
- CN-A- 102 938 923
- CN-A- 103 517 024
- KR-A- 20130 071 882
- US-A1- 2012 322 504

## Description

### Technical Field

The present invention relates to the field of mobile communication technology, and in particular, to a method and device for controlling a network connection.

### Background of the Related Art

At least the following technical problems are found in related art by the inventor of this application during the implementation of the technical scheme of the embodiments of the present application:
With the popularization of mobile terminals especially smartphones and the increase of the Wi-Fi network coverage range, when performing data transmission, the user can select a number of different network connection modes such as a data connection and a Wi-Fi connection to perform data transmission. The existing scheme for controlling the network connection is: the Wi-Fi connection is performed by default in a case that the Wi-Fi connection and the data connection of a user terminal are simultaneously opened to access a Wi-Fi network and maintain the Wi-Fi network connection, and only when a Wi-Fi signal is not detected, it will switch to the data connection, and data transmission is performed through the data connection, otherwise, the Wi-Fi network connection mode will be adopted all the time, which is not optional.

The problem existing in the above scheme is that: in a case of accessing the Wi-Fi network and maintaining the Wi-Fi network connection, the Wi-Fi signal may be very poor, and cannot provide a better network service to the user, in order to obtain a better network service, the user has a selection requirement for switching to other network connection modes, for example, a requirement for automatically selecting to switch to the data connection to perform data transmission. However, with regard to this problem, no effective solution exists in the related art.

The document CN101325769 A discloses a terminal comprising: a network channel identification unit for identifying a network channel type currently established by a terminal and a priority level of the network channel; a network channel switching unit for automatically switching a terminal to a current establishment of the network channel type in the highest priority of the network channel, the document also provides a method for a terminal to automatically switch network channels, in the embodiment of the invention, the priority of the network channel is preliminarily set on the terminal, and the terminal can be switched to the optimal internet access mode which the user pre-set in the case of the coexistence of the plurality of internet modes, and the network channel after the interruption, but also automatically switch to other network channels to continue to access, improve resource utilization.

The document KR 10-2013-0071882 A discloses a method of simultaneously transmitting data using a heterogeneous network, and more particularly, to a method of simultaneously transmitting data using a heterogeneous network, the data transmission is performed through the single access network at the same time, when simultaneous transmission mode is activated and simultaneous data transmission using the heterogeneous network is performed, the present invention relates to a method for simultaneously transmitting heterogeneous network-based data, an apparatus applied thereto, and a method of operating the same.

The document US 2012/0322504 A1 discloses a communication apparatus is provided, a first subscriber identity card camps on a first cell, which is associated with a first radio access technology (RAT) and belongs to a first wireless network, via a radio transceiver module, a second subscriber identity card camps on a second cell, which is associated with a second RAT and belongs to a second wireless network, via the radio transceiver module, a processor constructs a first packet switch connection with the first wireless network via the first subscriber identity card to perform data transfer in the first wireless network, measures a first data transfer throughput of the first wireless network when performing the data transfer via the first subscriber identity card, and determines to perform the data transfer in the second wireless network via the second subscriber identity card when a theoretical data transfer throughput corresponding to the second RAT is higher than the first data transfer throughput.

### Summary of the Invention

In view of this, the embodiments of the present invention are desired to provide a method and device for controlling a network connection according to independent claims 1 and 4, which can automatically select a network connection for performing data transmission between different network connections according to the actual network data transmission rate. Further improvements and embodiments are provided in the dependent claims.

Also provided is a method for controlling data transmission, the method includes: setting a threshold, herein the threshold is a network rate threshold; in a case that at least two networks are simultaneously connected, detecting a network rate of data transmission performed by each network in real time; comparing the detected network rate with the threshold as a reference basis to obtain a comparison result; and selecting a target network from the at least two networks according to the comparison result and performing data transmission.

In the above scheme, selecting a target network from the at least two networks according to the comparison result and performing data transmission includes: when there are two networks, acquiring a first rate corresponding to a first network and a second rate corresponding to a second network; and when the second rate is less than the threshold and the second rate is less than the first rate, selecting the first network to perform data transmission.

In the above scheme, selecting a target network from the at least two networks according to the comparison result and performing data transmission further includes: when the second rate is not less than the threshold or the second rate is not less than the first rate, selecting the second network to perform data transmission.

In the above scheme, the method further includes: after selecting the first network to perform data transmission, when the second rate is not less than the threshold or the second rate is not less than the first rate, switching to the second network for the second network to perform data transmission.

In the above scheme, the method further includes: after selecting the second network to perform data transmission, when the second rate is less than the threshold and the second rate is less than the first rate, switching to the first network for the first network to perform data transmission.

Also provided is a device for controlling data transmission, the device includes a setting module, a detection module and a selection module; herein, the setting module is configured to set a threshold, herein the threshold is a network rate threshold; the detection module is configured to, in a case that at least two networks are simultaneously connected, detect a network rate of data transmission performed by each network in real time; and the selection module is configured to compare the detected network rate with the threshold as a reference basis to obtain a comparison result; and select a target network from the at least two networks according to the comparison result and perform data transmission.

In the above scheme, a detection submodule is configured to, when there are two networks, acquire a first rate corresponding to a first network and a second rate corresponding to a second network; correspondingly, the selection module includes a first selection submodule configured to, when the second rate is less than the threshold and the second rate is less than the first rate, select the first network to perform data transmission.

In the above scheme, the selection module further includes a second selection submodule configured to, when the second rate is not less than the threshold or the second rate is not less than the first rate, select the second network to perform data transmission.

In the above scheme, the device further includes a first switching module configured to, after selecting the first network to perform data transmission, when the second rate is not less than the threshold or the second rate is not less than the first rate, switch to the second network for the second network to perform data transmission.

In the above scheme, the device further includes a second switching module configured to, after selecting the second network to perform data transmission, when the second rate is less than the threshold and the second rate is less than the first rate, switch to the first network for the first network to perform data transmission.

The setting module, the detection module, the selection module, the detection submodule, the first selection submodule, the second selection submodule, the first switching module and the second switching module can be implemented by using a Central Processing Unit (CPU), a Digital Signal Processor (DSP) or a Field-Programmable Gate Array (FPGA) when the processing is executed.

The embodiment of the present invention provides a method for controlling a network connection, in the method, a threshold is set and the threshold is a network rate threshold; in a case where at least two networks are simultaneously connected, a network rate of data transmission performed by each network is detected in real time; the detected network rate is compared with the threshold as a reference basis to obtain a comparison result; and a target network is selected from the at least two networks according to the comparison result and data transmission is performed; thus a network connection for performing data transmission is automatically selected with the existing data resources, which improves the users' data service experience.

### Brief Description of Drawings

FIG. 1 is a schematic diagram of a flow of a method for controlling a network connection according to an embodiment of the present invention;
FIG. 2 is a schematic diagram of a flow of the method for controlling the network connection according to one specific application example of the present invention;
FIG. 3 is a schematic diagram of a flow of the method for controlling the network connection according to another specific application example of the present invention; and
FIG. 4 is a schematic diagram of a structure of a device for controlling a network connection according to an embodiment of the present invention.

### Specific Embodiments

In an embodiment of the present invention, a threshold is set and the threshold is a network rate threshold; in a case where at least two networks are simultaneously connected, a network rate of data transmission performed by each network is detected in real time; the detected network rate is compared with the threshold as a reference basis to obtain a comparison result; and a target network is selected from the at least two networks according to the comparison result and data transmission is performed.

The present invention will be further described in detail through the accompanying drawings and specific embodiments below.

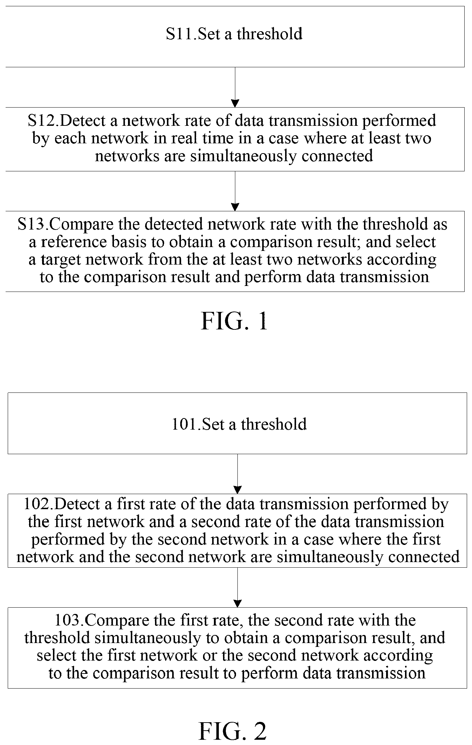

As shown in FIG. 1, a method for controlling a network connection provided by an embodiment of the present invention includes the following steps.

In step S11, a threshold is set; here, the threshold is a network rate threshold.

In step S12, a network rate of data transmission performed by each network is detected in real time in a case where at least two networks are simultaneously connected.

In step S13, the detected network rate is compared with the threshold as a reference basis to obtain a comparison result; and a target network is selected from the at least two networks according to the comparison result and data transmission is performed.

In S13, selecting a target network from the at least two networks according to the comparison result and performing data transmission includes: when there are two networks, acquiring a first rate corresponding to a first network and a second rate corresponding to a second network; selecting the first network to perform data transmission when the second rate is less than the threshold and the second rate is less than the first rate; and here, after selecting the first network to perform data transmission, when the second rate is not less than the threshold or the second rate is not less than the first rate, switching to the second network for the second network to perform data transmission.

Selecting a target network from the at least two networks according to the comparison result and performing data transmission also includes: selecting the second network to perform data transmission when the second rate is not less than the threshold or the second rate is not less than the first rate; and here, after selecting the second network to perform data transmission, when the second rate is less than the threshold and the second rate is less than the first rate, switching to the first network for the first network to perform data transmission.

In FIG. 2, the method for controlling the network connection provided by an embodiment of the present invention is elaborated with an example of a connection scenario that two networks exist, and the following steps are specifically included.

In step 101, a threshold is set.

Specifically, a mobile terminal presets a threshold, and the setting of the threshold includes: detecting a data transmission rate of the current network environment, and obtaining the threshold according to the data transmission rate; herein, the data transmission rate includes a first rate and/or a second rate.

Here, when detecting the data transmission rate of the current network environment, the mobile terminal is not required to judge whether the network connection for performing data transmission is a first network or a second network, it only pays attention to the data transmission rate of the data services performed by the mobile terminal itself, and the threshold is determined according to the data transmission rate, herein, the first network may be a 2G/3G/LTE network, and the second network may be a WI-FI network.

In step 102, a first rate of data transmission performed by the first network and a second rate of data transmission performed by the second network are detected in real time in a case where the first network and the second network are simultaneously connected.

Specifically, in a case where the mobile terminal is simultaneously connected with the first network and the second network, the first network and the second network are respectively detected, and the rate of the data transmission performed by the first network and the rate of the data transmission performed by the second network are acquired, here, the mobile terminal does not perform data transmission, and a first rate for the first network to perform data transmission when not performing data transmission and a second rate for the second network to perform data transmission when not performing data transmission can be detected through system services.

In practical applications, a user terminal acquires data transmission rate of various networks through system services, sends a specific data packet request to a network of which the data transmission rate needs to be detected by using the system services, and calculates the data transmission rate of the network through a relation between a size of the received data packet and a consumed time; and the destination addresses of the data packet requests are different in the process of detecting the data transmission rate, thus the data transmission rates of the first network and the second network are simultaneously detected.

In step 103, the first rate and the second rate are simultaneously compared with the threshold to obtain a comparison result, and the first network or the second network is selected to perform data transmission according to the comparison result.

Specifically, simultaneously comparing the first rate and the second rate with the threshold to obtain a comparison result includes the following two cases:
case 1: the second rate is less than the threshold and the second rate is less than the first rate;
case 2: the second rate is not less than the threshold or the second rate is not less than the first rate.

When the comparison result is the case 1, the mobile terminal selects the first network to perform data transmission; and
when the comparison result is the case 2, the mobile terminal selects the second network to perform data transmission.

Here, when selecting the first network or the second network to perform data transmission, the mobile terminal continues to detect the first rate corresponding to the first network and the second rate corresponding to the second network, and judges whether to maintain the existing network connection or switch to another network connection according to the acquired first rate and the second rate.

Specifically, after selecting the first network to perform data transmission, when the case 2 is met, that is, when the second rate is not less than the threshold or the second rate is not less than the first rate, the switching is performed from the first network to the second network and the data transmission is performed by the second network.

After selecting the second network to perform data transmission, when the case 1 is met, that is, when the second rate is less than the threshold and the second rate is less than the first rate, the switching is performed from the second network to the first network and the data transmission is performed by the first network.

In practical applications, when the user terminal switches from the first network to the second network or from the second network to the first network, the broken data transmission may be continuously transmitted by means of breakpoint continuous transmission, specifically, with respect to one data service, another network is used to continue to upload or download the unfinished part starting from the part that has been uploaded or downloaded by one network, and it is not required to restart uploading or downloading the ongoing data service, which improves the speed of the data service; meanwhile, when there is data to be transmitted, the data transmission rate may be detected by means of breakpoint continuous transmission.

Therefore, in consideration of the difference between different network connections, a technical scheme is required, which can automatically select a network connection for performing data transmission between different network connections according to the actual network data transmission rate, thereby providing better network services to the user, and meeting a selection requirement of the user to switch to another network connection mode.

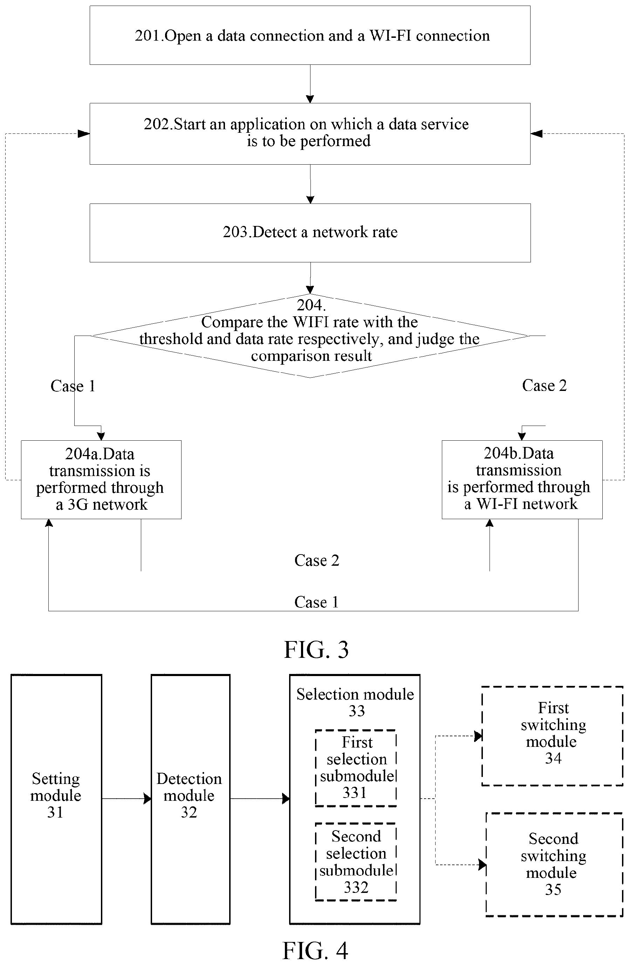

FIG. 3 is another specific application of the embodiment of the present invention, here the method for controlling the network connection according to an embodiment of the present invention is elaborated with an example of the first network being a 3G network and the second network being a WI-FI network, and as shown in FIG. 3, the following steps are included.

In step 201, a data connection and a WI-FI connection are opened.

Here, the data connection is a network connection of the 3G network, and the WI-FI connection is a network connection of the WI-FI network; the data connection and the WI-FI connection are simultaneously opened, herein, they may be opened when the mobile terminal powers on or when there is a network connection request, and the way of opening may be manual opening by the user or automatic opening through a control application open software. Here, the control application is a controlled application with a function of controlling the data connection and the Wi-Fi connection, such as a mobile phone assistant.

In step 202, an application on which a data service is to be performed is started.

At this point, an application on which a data service is to be performed on the mobile terminal is started, and the application needs to perform the data services over the data connection or the WI-FI connection; applications here are all applications that are located on the user terminal with data transmission requirement.

In step 203, a network rate is detected.

Here, the detected network rates include a data rate of the 3G network and a WI-FI rate of the WI-FI network, an average value of data transmission rates detected within 30 seconds is calculated to obtain an average rate, and the average rate is multiplied by a weight value of one half to obtain a threshold, herein, the data transmission rate is a data transmission rate of the data service performed by the mobile terminal itself, and the threshold is determined according to the data transmission rate.

In practical applications, the calculation of the average rate may be selected as a average value within a time period from 30 seconds to 2 minutes, and the weight value of the average rate may also be other numerical values other than one half, which is not limited in the embodiment of the present invention.

In step 204, the WI-FI rate is compared with the threshold and the data rate respectively, and a comparison result is judged.

Here, after the threshold is determined, the detected WI-FI rate is compared with the determined threshold and the data rate respectively, when the comparison result meets the case 1, that is, the WI-FI rate is less than the threshold and the WI-FI rate is less than the data rate, step 204a is performed, and the data transmission is performed through the data connection; and when the comparison result meets the case 2, that is, the WI-FI rate is not less than the threshold or the WI-FI rate is not less than the data rate, step 204b is performed, and the data transmission is performed through the WI-FI connection.

In step 204a, the data transmission is performed through a 3G network.

At this point, the mobile terminal performs data transmission through the data connection in the connected 3G network and the WI-FI network; the mobile terminal detects a transmission rate of the WI-FI network while performing data transmission through the 3G network, and compares the data rate of the 3G network in which data transmission is performed, the WI-FI rate of the WI-FI network in which data transmission is not performed with the determined threshold, when the WI-FI rate is less than the threshold and the WI-FI rate is less than the data rate, maintains the current data connection; and when the WI-FI rate is not less than the threshold or the WI-FI rate is not less than the data rate, switches to the WI-FI connection.

In step 204b, the data transmission is performed through a WI-FI network.

At this point, the mobile terminal performs data transmission through the WI-FI connection in the connected 3G network and the WI-FI network, the mobile terminal detects a transmission rate of the 3G network while performing data transmission through the WI-FI network, and compares the WI-FI rate of the WI-FI network in which data transmission is performed, the data rate of the 3G network in which data transmission is not performed with the determined threshold, when the WI-FI rate is not less than the threshold or the WI-FI rate is not less than the data rate, maintains the current WI-FI connection; and when the WI-FI rate is less than the threshold and the WI-FI rate is less than the data rate, switches to the data connection.

In practical applications, as shown by dotted lines in FIG. 3, when an application is closed, the mobile terminal does not close the data connection or the Wi-Fi connection, but when a new application is started, controls the network connection again through the process shown in step 202 to step 204a or step 204b to select an appropriate network connection for performing data transmission.

In practical applications, when selecting a network connection for performing data transmission, if a data transmission speed of the Wi-Fi network is greater than the threshold, a mobile device performs related operations of the Wi-Fi network connection, and compares a data transmission speed of the current Wi-Fi network with a data transmission speed of the current 3G network.

If the data transmission speed of the current Wi-Fi network is greater than or equal to the data transmission speed of the current 3G network, the mobile device maintains the current network connection of the Wi-Fi network; if the data transmission speed of the current Wi-Fi network is less than the data transmission speed of the current data service network but greater than the threshold, the mobile device maintains the current network connection of the Wi-Fi network; and if the data transmission speed of the current Wi-Fi network is less than the data transmission speed of the current 3G network and is not greater than the threshold, the mobile device selects the 3G network to perform related operations of the data service.

It should be noted that, a basis for judging whether to perform data transmission through the first network or to perform data transmission through the second network in the embodiment of the present invention, namely that the comparison result between the first rate, the second rate and the threshold is divided into two cases (case 1 and case 2) is based on the principle of preferentially selecting the second network, and when the second network is the Wi-Fi network, the mobile terminal can better satisfy the data transmission of large flow of data.

In order to implement the above method, the embodiment of the present invention further provides a device for controlling a network connection, and as shown in FIG. 4, the device includes: a setting module 31, a detection module 32 and a selection module 33.

The setting module 31 is configured to set a threshold, herein the threshold is a network rate threshold.

The detection module 32 is configured to detect a network rate of data transmission performed by each network in real time in the case where at least two networks are simultaneously connected; herein, in the case where at least two networks are simultaneously connected, the network rate of data transmission performed by each network is detected in real time.

The selection module 33 is configured to compare the detected network rate with the threshold as a reference basis to obtain a comparison result; and select a target network from the at least two networks according to the comparison result and perform data transmission.

The selection module 33 includes: a first selection submodule 331 and a second selection submodule 332; herein, the first selection submodule 331 is configured to select the first network to perform data transmission when the second rate is less than the threshold and the second rate is less than the first rate; and the second selection submodule 332 is configured to select the second network to perform data transmission when the second rate is not less than the threshold or the second rate is not less than the first rate.

As shown in FIG. 4, the device further includes a first switching module 34 and a second switching module 35, herein, the first switching module 34 is configured to, after selecting the first network to perform data transmission, when the second rate is not less than the threshold or the second rate is not less than the first rate, switch to the second network for the second network to perform data transmission; and the second switching module 35 is configured to, after selecting the second network to perform data transmission, when the second rate is less than the threshold and the second rate is less than the first rate, switch to the first network for the first network to perform data transmission.

In practical applications, the device or system device provided by the present invention can serve as a separate system, and it can also be a logic unit added in the existing mobile terminals such as a mobile phone for completing different functions.

When the logic unit is added in the mobile phone, the setting module 31, the detection module 32, the selection module 33, the first switching module 34 and the second switching module 35 can be implemented by a Central Processing Unit (CPU), a Digital Signal Processor (DSP) or a Field Programmable Gate Array (FPGA) located in the mobile phone.

The above description is only the preferred embodiments of the present invention, which is not used to limit the protection scope of the present invention.

### Industrial Applicability

The embodiment of the present invention provides a method for controlling a network connection, in the method, a threshold is set and it is a network rate threshold; in a case where at least two networks are simultaneously connected, a network rate of data transmission performed by each network is detected in real time; the detected network rate is compared with the threshold as a reference basis to obtain a comparison result; and a target network is selected from the at least two networks according to the comparison result and data transmission is performed; thus a network connection for performing data transmission is automatically selected with the existing data resources, which improves the users' data service experience.

## Claims

1. A method for controlling data transmission, performed by a device of a mobile terminal, comprising:
setting a threshold (S11), wherein the threshold is a network rate threshold, wherein an average value of data transmission rates detected within a period of time is calculated to obtain an average rate, and the average rate is multiplied by a weight value to obtain the threshold, herein, the data transmission rate is a data transmission rate of data service performed by the mobile terminal itself;
in a case that at least two networks are simultaneously connected, detecting a network rate of data transmission performed by each network in real time (S12);
comparing the detected network rate with the threshold as a reference basis to obtain a comparison result; and
selecting a target network from the at least two networks according to the comparison result and performing data transmission (S13),
wherein,
said selecting a target network from the at least two networks according to the comparison result and performing data transmission comprises:
when there are two networks, acquiring a first rate corresponding to a first network and a second rate corresponding to a second network; and
when the second rate is less than the threshold and the second rate is less than the first rate, selecting the first network to perform data transmission,
when the second rate is not less than the threshold or the second rate is not less than the first rate, selecting the second network to perform data transmission.

2. The method according to claim 1, further comprising:
after selecting the first network to perform data transmission, when the second rate is not less than the threshold or the second rate is not less than the first rate, switching to the second network so that the data transmission is performed by the second network.

3. The method according to claim 1, further comprising:
after selecting the second network to perform data transmission, when the second rate is less than the threshold and the second rate is less than the first rate, switching to the first network so that the data transmission is performed by the first network.

4. A device of a mobile terminal controlling data transmission comprising: a setting module (31), a detection module (32) and a selection module (33); wherein,
the setting module is configured to set a threshold, wherein the threshold is a network rate threshold, wherein an average value of data transmission rates detected within a period of time is calculated to obtain an average rate, and the average rate is multiplied by a weight value to obtain the threshold, herein, the data transmission rate is a data transmission rate of data service performed by the mobile terminal itself;
the detection module is configured to, in a case that at least two networks are simultaneously connected, detect a network rate of data transmission performed by each network in real time; and
the selection module is configured to compare the detected network rate with the threshold as a reference basis to obtain a comparison result; and select a target network from the at least two networks according to the comparison result and perform data transmission,
wherein,
the detection module is further configured to, when there are two networks, acquire a first rate corresponding to a first network and a second rate corresponding to a second network;
correspondingly, the selection module comprises a first selection submodule (331) configured to, when the second rate is less than the threshold and the second rate is less than the first rate, select the first network to perform data transmission,
the selection module further comprises a second selection submodule (332) configured to, when the second rate is not less than the threshold or the second rate is not less than the first rate, select the second network to perform data transmission.

5. The device according to claim 4, wherein the device further comprises a first switching module (34) configured to, after selecting the first network to perform data transmission, when the second rate is not less than the threshold or the second rate is not less than the first rate, switch to the second network so that the data transmission is performed by the second network.

6. The device according to claim 4, wherein the device further comprises a second switching module (35) configured to, after selecting the second network to perform data transmission, when the second rate is less than the threshold and the second rate is less than the first rate, switch to the first network so that the data transmission is performed by the first network.

## Patentansprüche

1. Verfahren zur Steuerung von Datenübertragung, durchgeführt durch eine Vorrichtung eines mobilen Endgeräts, Folgendes umfassend:
Einstellen eines Schwellenwerts (S11), wobei der Schwellenwert ein Netzwerkratenschwellenwert ist, wobei ein Durchschnittswert der Datenübertragungsraten, detektiert während eines Zeitraums,
berechnet wird, um eine Durchschnittsrate zu erhalten, und wobei die Durchschnittsrate mit einem Gewichtungswert multipliziert wird, um den Schwellenwert zu erhalten, wobei hierin die Datenübertragungsrate eine Datenübertragungsrate des Datendienstes ist, der durch das mobile Endgerät selbst durchgeführt wird;
im einem Fall, in dem zumindest zwei Netzwerke gleichzeitig verbunden werden, Detektieren einer Netzwerkrate der Datenübertragung, die durch jedes Netzwerk in Echtzeit durchgeführt wird (S12);
Vergleichen der detektierten Netzwerkrate mit dem Schwellenwert als eine Referenzbasis zum Erhalten eines Vergleichsergebnisses; und
Auswählen eines Zielnetzwerks aus zumindest zwei Netzwerken gemäß dem Vergleichsergebnis und Durchführen von Datenübertragung (S13),
wobei
das Auswählen des Zielnetzwerks aus zumindest zwei Netzwerken gemäß dem Vergleichsergebnis und das Durchführen der Datenübertragung Folgendes umfasst:
wenn es zwei Netzwerke gibt, Erfassen einer ersten Rate entsprechend einem ersten Netzwerk und einer zweiten Rate entsprechend einem zweiten Netzwerk; und
wenn die zweite Rate unter dem Schwellenwert liegt und die zweite Rate unter der ersten Rate liegt, Auswählen des ersten Netzwerks zum Durchführen der Datenübertragung,
wenn die zweite Rate nicht unter dem Schwellenwert liegt oder die zweite Rate nicht unter der ersten Rate liegt, Auswählen des zweiten Netzwerks zum Durchführen der Datenübertragung.

2. Verfahren nach Anspruch 1, ferner Folgendes umfassend:
nach dem Auswählen des ersten Netzwerks zum Durchführen der Datenübertragung, wenn die zweite Rate nicht unter dem Schwellenwert liegt oder die zweite Rate nicht unter der ersten Rate liegt, Umschalten auf das zweite Netzwerk, sodass die Datenübertragung von dem zweiten Netzwerk durchgeführt wird.

3. Verfahren nach Anspruch 1, ferner Folgendes umfassend:
nach dem Auswählen des zweiten Netzwerks zum Durchführen der Datenübertragung, wenn die zweite Rate unter dem Schwellenwert liegt oder die zweite Rate unter der ersten Rate liegt, Umschalten auf das erste Netzwerk, sodass die Datenübertragung von dem ersten Netzwerk durchgeführt wird.

4. Vorrichtung eines mobilen Endgeräts, das Datenübertragung steuert, ferner Folgendes umfassend: ein Einstellmodul (31), ein Detektionsmodul (32) und ein Auswahlmodul (33); wobei
das Einstellmodul dazu konfiguriert ist, einen Schwellenwert einzustellen, wobei der Schwellenwert ein Netzwerkratenschwellenwert ist, wobei ein Durchschnittswert der Datenübertragungsraten, detektiert während eines Zeitraums, berechnet wird, um eine Durchschnittsrate zu erhalten, und wobei die Durchschnittsrate mit einem Gewichtungswert multipliziert wird, um den Schwellenwert zu erhalten, wobei hierin die Datenübertragungsrate eine Datenübertragungsrate des Datendienstes ist, der durch das mobile Endgerät selbst durchgeführt wird;
wobei das Detektionsmodul dazu konfiguriert ist, in einem Fall, in dem zumindest zwei Netzwerke gleichzeitig verbunden sind,
eine Netzwerkrate der Datenübertragung, die durch jedes Netzwerk in Echtzeit durchgeführt wird, zu detektieren; und
wobei das Auswahlmodul dazu konfiguriert ist, die detektierte Netzwerkrate mit dem Schwellenwert als eine Referenzbasis zum Erhalten eines Vergleichsergebnisses zu vergleichen; und ein Zielnetzwerk aus den zumindest zwei Netzwerken gemäß dem Vergleichsergebnis auszuwählen und Datenübertragung durchzuführen,
wobei
das Detektionsmodul ferner dazu konfiguriert ist, wenn es zwei Netzwerke gibt, eine erste Rate entsprechend einem ersten Netzwerk und eine zweite Rate entsprechend einem zweiten Netzwerk zu erfassen;
wobei dementsprechend das Auswahlmodul ein erstes Auswahluntermodul (331) umfasst, das dazu konfiguriert ist, wenn die zweite Rate unter dem Schwellenwert liegt und die zweite Rate unter der ersten Rate liegt, das erste Netzwerk zum Durchführen der Datenübertragung auszuwählen,
wobei das Auswahlmodul ferner ein zweites Auswahluntermodul (332) umfasst, das dazu konfiguriert ist, wenn die zweite Rate nicht unter dem Schwellenwert liegt oder wenn die zweite Rate nicht unter der erste Rate liegt, das zweite Netzwerk zum Durchführen der Datenübertragung auszuwählen.

5. Vorrichtung nach Anspruch 4, wobei die Vorrichtung ferner ein erstes Schaltmodul (34) umfasst, das nach dem Auswählen des ersten Netzwerks zum Durchführen der Datenübertragung, wenn die zweite Rate nicht unter dem Schwellenwert liegt oder wenn die zweite Rate nicht unter der ersten Rate liegt, dazu konfiguriert ist, auf das zweite Netzwerk umzuschalten, sodass die Datenübertragung von dem zweiten Netzwerk durchgeführt wird.

6. Vorrichtung nach Anspruch 4, wobei die Vorrichtung ferner ein zweites Schaltmodul (35) umfasst, das nach dem Auswählen des zweiten Netzwerks zum Durchführen der Datenübertragung, wenn die zweite Rate unter dem Schwellenwert liegt oder wenn die zweite Rate unter der ersten Rate liegt, dazu konfiguriert ist, auf das erste Netzwerk umzuschalten, sodass die Datenübertragung von dem ersten Netzwerk durchgeführt wird.

## Revendications

1. Procédé pour commander la transmission de données, réalisé par un dispositif d'un terminal mobile, comprenant le fait :
de définir un seuil (S11), où le seuil est un seuil de débit de réseau, où une valeur moyenne des débits de transmission de données détectés dans une période de temps est calculée pour obtenir un débit moyen, et le débit moyen est multiplié par une valeur de pondération pour obtenir le seuil, ici, le débit de transmission de données est un débit de transmission de données d'un service de données réalisé par le terminal mobile lui-même ;
dans le cas où au moins deux réseaux sont connectés simultanément, de détecter un débit de réseau de transmission de données réalisée par chaque réseau en temps réel (S12) ;
de comparer le débit de réseau détecté au seuil comme base de référence pour obtenir un résultat de comparaison ; et
de sélectionner un réseau cible parmi les au moins deux réseaux selon le résultat de comparaison et de réaliser une transmission de données (S13),
dans lequel,
ladite étape de sélection d'un réseau cible parmi les au moins deux réseaux selon le résultat de comparaison et de réalisation de la transmission de données comprend le fait :
lorsqu'il y a deux réseaux, d'acquérir un premier débit correspondant à un premier réseau et un deuxième débit correspondant à un deuxième réseau ; et
lorsque le deuxième débit est inférieur au seuil et le deuxième débit est inférieur au premier débit, de sélectionner le premier réseau pour réaliser la transmission de données,
lorsque le deuxième débit n'est pas inférieur au seuil ou le deuxième débit n'est pas inférieur au premier débit, de sélectionner le deuxième réseau pour réaliser la transmission de données.

2. Procédé selon la revendication 1, comprenant en outre le fait :
après avoir sélectionné le premier réseau pour réaliser la transmission de données, lorsque le deuxième débit n'est pas inférieur au seuil ou le deuxième débit n'est pas inférieur au premier débit, de commuter vers le deuxième réseau de sorte que la transmission de données soit réalisée par le deuxième réseau.

3. Procédé selon la revendication 1, comprenant en outre le fait :
après avoir sélectionné le deuxième réseau pour réaliser la transmission de données, lorsque le deuxième débit est inférieur au seuil et le deuxième débit est inférieur au premier débit, de commuter vers le premier réseau de sorte que la transmission de données soit réalisée par le premier réseau.

4. Dispositif d'un terminal mobile commandant la transmission de données comprenant : un module de définition (31), un module de détection (32) et un module de sélection (33) ; où,
le module de définition (31) est configuré pour définir un seuil, où le seuil est un seuil de débit de réseau, où une valeur moyenne des débits de transmission de données détectés dans une période de temps est calculée pour obtenir un débit moyen, et le débit moyen est multiplié par une valeur de pondération pour obtenir le seuil, ici, le débit de transmission de données est un débit de transmission de données de service de données réalisé par le terminal mobile lui-même ;
le module de détection est configuré, dans le cas où au moins deux réseaux sont connectés simultanément, pour détecter un débit de réseau de transmission de données réalisée par chaque réseau en temps réel ; et
le module de sélection est configuré pour comparer le débit de réseau détecté au seuil comme base de référence pour obtenir un résultat de comparaison ; et pour sélectionner un réseau cible parmi les au moins deux réseaux selon le résultat de comparaison et pour réaliser la transmission de données,
dans lequel,
le module de détection est en outre configuré, lorsqu'il y a deux réseaux, pour acquérir un premier débit correspondant à un premier réseau et un deuxième débit correspondant à un deuxième réseau ;
en conséquence, le module de sélection comprend un premier sous-module de sélection (331) configuré, lorsque le deuxième débit est inférieur au seuil et le deuxième débit est inférieur au premier débit, pour sélectionner le premier réseau pour réaliser la transmission de données,
le module de sélection comprend en outre un deuxième sous-module de sélection (332) configuré, lorsque le deuxième débit n'est pas inférieur au seuil ou le deuxième débit n'est pas inférieur au premier débit, pour sélectionner le deuxième réseau pour réaliser la transmission de données.

5. Dispositif selon la revendication 4, dans lequel le dispositif comprend en outre un premier module de commutation (34) configuré, après avoir sélectionné le premier réseau pour réaliser la transmission de données, lorsque le deuxième débit n'est pas inférieur au seuil ou le deuxième débit n'est pas inférieur au premier débit, pour commuter vers le deuxième réseau de sorte que la transmission de données soit réalisée par le deuxième réseau.

6. Dispositif selon la revendication 4, dans lequel le dispositif comprend en outre un deuxième module de commutation (35) configuré, après avoir sélectionné le deuxième réseau pour réaliser la transmission de données, lorsque le deuxième débit est inférieur au seuil et le deuxième débit est inférieur au premier débit, pour commuter vers le premier réseau de sorte que la transmission de données soit réalisée par le premier réseau.
